# EUROPEAN PATENT SPECIFICATION

(11) **EP 1 715 174 B1**
(45) Date of publication and mention of the grant of the patent: **05.05.2010**
(21) Application number: 06007799.7
(22) Date of filing: 13.04.2006
(51) Int. Cl.: F02M 15/02

(54) **Carburettors**
Vergasers
Carburateurs

(30) Priority: 22.04.2005 GB 0508106
(43) Date of publication of application: 25.10.2006
(73) Proprietor: Bollons, Bernard, Shottery St. Mary Stratford CV37 9BW (GB)
(72) Inventor: Bollons, Bernard, Shottery St. Mary Stratford CV37 9BW (GB)
(74) Representative: Watts, Peter Graham

(56) References cited:
- DE-A1- 2 309 954
- DE-A1- 3 045 327
- DE-A1- 3 527 380
- DE-A1- 3 917 107
- FR-A- 1 404 104
- GB-A- 1 117 843
- GB-A- 2 037 894
- JP-A- 6 101 777
- US-A1- 2003 178 064

## Description

The present invention relates to carburettors and in particular carburettors with a throttle control valve in the form of a disc which can be rotated to control the flow of air/fuel mixture into an internal combustion engine and where the fuel jet is situated upstream of the throttle valve. The invention offers a solution to the phenomenon known as carburettor icing associated with this type of carburettor. Carburettor icing has been a problem for many decades but the mechanism for ice formation in a throttle plate carburettor does not seem to have been fully understood. The inventor believes the mechanism for ice formation to be as described below.

In this type of carburettor, a fuel mist issues from the jet. Normally the fuel is atomised by means of a venturi and the air flow through the carburettor, to set up the required fuel-air ratio for correct running of the engine.

Due to the pressure drop developed across the throttle plate a partial vacuum is formed around the throttle plate disc, thus causing the atomised fuel to turn to vapour, thereby cooling the fuel air mixture by the latent heat of vaporisation.

The cooling effect of the vaporisation of the fuel is instantaneous and significant. It sets up a temperature gradient of 20 - 30°C around the throttle plate and under certain relative humidity conditions and intermediate throttle angles, and hence air flow rates, ice will rapidly form on the throttle plate and associated metal parts of the carburettor. This partial obstruction of the airflow, due to ice formation, can lead to the fuel/air ratio altering to such an extent that the mixture becomes too rich and the engine will stop in a matter of seconds. This is a highly undesirable situation, especially for single engine aircraft. Hitherto, this problem has been addressed by either heating the carburettor body or heating the air before it enters the carburettor. These methods are a compromise and will not prevent icing under all conditions. These methods furthermore require large amounts of heat to effectively prevent icing, demanding a compromise between engine power and effective ice prevention. For this reason most designs require the system to be manually engaged by the pilot, as stated in the aircraft flight manual, and are susceptible to pilot error. Both of these methods can reduce the engine power by as much as 15 - 20% and as such are only engaged when maximum power from the engine is not essential.

DE 2309954 discloses a carburettor in which a heating element is provided on the throttle disc.

In accordance with one aspect of the present invention, a carburettor includes a throttle valve in the form of a disc which can be rotated to control flow of an air/fuel mixture through a duct, the throttle disc having a heating element formed on at least one surface of said throttle disc, and an electric power source; characterised in that a temperature sensor is provided on at least one surface of the disc, the electric power source being controlled by the temperature sensor, to maintain the temperature of the throttle disc above a predetermined minimum temperature, the temperature sensor having a response time of the order of 10µs and a resolution of the order of 0.01 °C.

In this manner, the throttle disc is heated directly thereby avoiding heat losses associated with the methods used hitherto. Moreover, the temperature sensor continuously monitors the temperature of the throttle disc, so that the heating element is only energised when required. Consequently, when the circuit is quiescent, when icing is not a problem, the power consumption is minute and the system can be left permanently connected to the aircraft electrical supply so that pilot intervention is not required.

Furthermore, the heat required and hence power consumed to keep the throttle plate ice free is a fraction of that required to heat either the carburettor body or the fuel/air mixture, thereby allowing maximum engine power to be achieved under any likely icing conditions.

According to a preferred embodiment of the invention, the heating element is a thick film element which is deposited on the surface of the metal throttle disc. This type of heating element provides a very rapid response which may be in excess of 20°C per second.

The temperature sensor is preferably a planar diode giving a voltage linear proportional to temperature.

A pulsed DC power supply is preferably used to energise the heating element, the width of the pulses being controlled to decrease proportionally as the temperature of the throttle disc rises from the predetermined minimum value to a second predetermined value.

The invention is now described by way of example only, with reference to the accompanying drawings, in which:-
Figure 1 is a cross-section through a carburettor;
Figure 2 is an enlarged plan view of the throttle disc of the carburettor illustrated in Fig. 1; and
Figure 3 is a block diagram of the power control circuit for the carburettor illustrated in Fig.1.

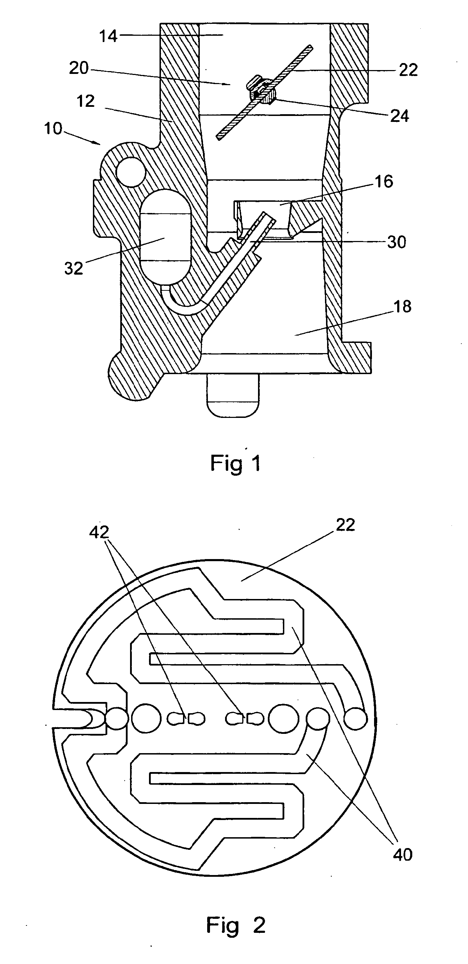

As illustrated in Fig. 1, a carburettor 10 has a body 12 which defines a duct 14, being connected to an inlet manifold of an internal combustion engine and being open at the other end 18 to a supply of air.

A throttle valve 20 is located intermediate of the duct 14, the throttle valve 20 comprising a stainless steel disc 22 mounted on a hollow spindle 24, for rotation through 90°, about an axis diametrical of the duct 14. In this manner, the disc 22 can be rotated between a position in which it is disposed substantially perpendicular to the longitudinal axis of the duct 14 and substantially closes the duct 14; and a position in which it lies parallel to the axis of the duct 14, and causes minimal obstruction to flow of air/fuel mixture through the duct 14.

A fuel jet 30 is located intermediate of the throttle valve 20 and the end 18 of duct 14 open to the air supply. The fuel jet 30 opens at one end into the venturi 16 and at the other end to a fuel chamber 32 defined by the body 12 of the carburettor 10, so that air flowing over the jet 30 will draw fuel from the chamber 32 atomising the fuel so that it mixes with the flow of air.

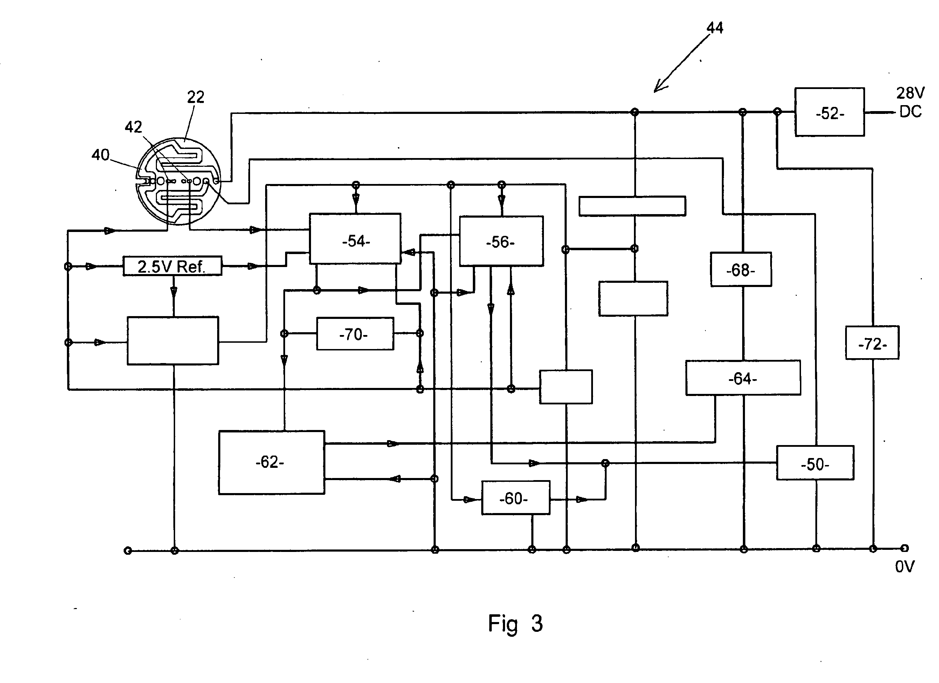

As illustrated in Fig. 2, a thick film heating element 40 and a planar diode 42 are deposited on one surface of the disc 22, with a permanent hard over-glaze. The thick film heating element 40 and planar diode 42 are connected to a DC power supply/control circuit 44, as described in detail with reference to Fig. 3, by means or wires, which are taken to the outside of the carburettor body 12, through the hollow spindle 24, directly to the control circuit, which control circuit being small and of negligible mass, is mounted co-axially and integral with the throttle spindle so that only two supply wires are required to connect to the 28VDC supply.

As illustrated in Fig. 3, the DC power supply/control circuit 44 comprises a 28 volt DC supply. The heating element 40 is connected across the DC supply in series with a mosfet transistor 50 which controls connection of the heating element 40 to the DC supply.

A reverse polarity protection device 52 which consists of a low forward volt drop blocking diode, is provided in the DC supply, to prevent damage to the controller in the event of incorrect connections during installation.

The signal from the temperature sensor 42, the voltage of which is proportional to the temperature of the throttle disc 14, is compared with a 2.5 volt reference signal, by means of a differential amplifier 54. The differential amplifier 54 generates an error signal, which increases as the throttle disc 14 cools. The error signal of the differential amplifier 54 controls a pulse width modulator 56. The pulse width modulator 56 produces pulses at a frequency of the order of 100 pulses per second. The width of the pulses, that is the on time, increases with the error signal so that at the predetermined minimum temperature, typically 2°C, the pulse width will be at a maximum, while at a second predetermined temperature, typically 10°C the pulse width will be zero.

The pulses from the pulse width modulator 56 control the mosfet transistor 50, switching on the mosfet transistor 50 and connecting the heater element 40 to the 28 volt DC supply. In this manner, the heat produced by the heating element 40 will be at a maximum (fully on) when the temperature of a plate is at the predetermined minimum value and will reduce proportionally as the temperature rises, until at the second predetermined temperature the heating element 40 will be turned off.

A power up detector 60 is also provided in the circuit which will switch the mosfet transistor 50 on for a period of two seconds after power up of the system to connect the heating element 40 to the DC supply. During this period a differentiator and threshold detector 62 monitors the error signal from the differential amplifier 54 and when the rate of change of the throttle plate temperature exceeds 10° C/second, turns switch 64 on to illuminate a cockpit LED self test indicator 68.

The circuit also includes a display logger 70 which is connected to the differential amplifier 54 to provide a digital readout and log of the throttle disc temperature. A cockpit power supply LED indicator 72 also provides an indication that the system is correctly connected to the DC supply.

Various modifications may be made without departing from the invention. For example, the characteristics of the heating element and temperature sensor are provided by way of example only and other heating elements and temperature sensors may be used which will provide sufficient heat and a sufficient response time to prevent icing of the carburettor.

A second temperature sensor, for example planar diode may be provided on the throttle disc, to check proper functioning of planar diode 42 and provide an indication to the pilot, if there is a malfunction.

## Claims

1. A carburettor (10) including a throttle valve (20) in the form of a disc (22) which can be rotated to control flow of an air/fuel mixture through a duct (14), the throttle disc (22) having a heating element (40) formed on at least one surface of said throttle disc (22), and an electric power supply; **characterised in that** a temperature sensor (42) is provided on at least one surface of the disc (22), the electric power supply being controlled by the temperature sensor (42), to maintain the temperature of the throttle disc (22) above a predetermined minimum temperature, the temperature sensor (42) having a response time of the order of 10µs and a resolution of the order of 0.01°C.

2. A carburettor (10) according to claim 1 **characterised in that** the heating element (40) is a thick film element.

3. A carburettor (10) according to claim 1 or 2 **characterised in that** the throttle disc (22) is formed from stainless steel.

4. A carburettor (10) according to any one of the preceding claims **characterised in that** the temperature sensor (42) is a planar diode.

5. A carburettor (10) according to any one of the preceding claims **characterised in that** the first predetermined value is of the order of 2°C.

6. A carburettor (10) according to any one of the preceding claims **characterised in that** a pulsed power supply is used to energise the heating element (40).

7. A carburettor (10) according to claim 6 **characterised in that** the width of the pulses decreases proportionally as the temperature of the throttle disc (22) rises from the predetermined minimum value to a second predetermined value.

8. A carburettor (10) according to claim 7 **characterised in that** the second predetermined value is of the order of 10°C.

9. A carburettor (10) according to claim 6 or 7 **characterised in that** the pulse width is at a maximum when the throttle disc temperature is at the predetermined minimum value and is zero when the throttle disc temperature is at the second predetermined value.

10. A carburettor (10) according to any one of the preceding claims **characterised in that** the power supply/control circuit (44) includes a self test circuit (60,62,64), which switches on the heating element (40) for a predetermined period, at power up of the system, and provides an indication of correct functioning if the rate of change in throttle plate temperature exceeds a predetermined value.

11. A carburettor (10) according to claim 10 **characterised in that** the predetermined rate of change of throttle plate temperature is of the order of 10°C/sec.

12. A carburettor (10) according to any one of the preceding claims, **characterised in that** the throttle disc (22) is mounted on a spindle (24), control circuit (44) being an integral part of the throttle spindle (24) and/or an actuator lever thereby minimising the wires to be connected to the electrical power supply.

## Patentansprüche

1. Vergaser (10) mit einer Drosselklappe (20) in Form einer Scheibe (22), die gedreht werden kann, um das Strömen eines Luft-/Kraftstoffgemisches durch einen Kanal (14) zu steuern, wobei die Drosselscheibe (22) ein Heizelement (40) hat, das auf mindestens einer Oberfläche der Drosselscheibe (22) gebildet ist, und einer elektrischen Stromzufuhr; **dadurch gekennzeichnet, dass** ein Temperaturfühler (42) auf mindestens einer Oberfläche der Scheibe (22) vorgesehen ist, wobei die elektrische Stromzufuhr durch den Temperaturfühler (42) gesteuert wird, um die Temperatur der Drosselscheibe (22) über einer vorbestimmten Minimaltemperatur zu halten, wobei der Temperaturfühler (42) eine Ansprechzeit in der Größenordnung von etwa 10 µs und eine Auflösung in der Größenordnung von etwa 0,01 °C hat.

2. Vergaser (10) nach Anspruch 1, **dadurch gekennzeichnet, dass** das Heizelement (40) ein Dickschichtelement ist.

3. Vergaser (10) nach Anspruch 1 oder 2, **dadurch gekennzeichnet, dass** die Drosselscheibe (22) aus rostfreiem Stahl gebildet ist.

4. Vergaser (10) nach irgendeinem der vorhergehenden Ansprüche, **dadurch gekennzeichnet, dass** der Temperaturfühler (42) eine Planardiode ist.

5. Vergaser (10) nach irgendeinem der vorhergehenden Ansprüche, dass der erste vorbestimmte Wert in der Größenordnung von etwa 2 °C ist.

6. Vergaser (10) nach irgendeinem der vorhergehenden Ansprüche, **dadurch gekennzeichnet, dass** eine impulsförmige Stromzufuhr verwendet wird, um das Heizelement (40) zu erregen.

7. Vergaser (10) nach Anspruch 6, **dadurch gekennzeichnet, dass** die Breite der Impulse proportional abnimmt, wenn die Temperatur der Drosselscheibe (22) von dem vorbestimmten Minimalwert auf einen zweiten vorbestimmten Wert ansteigt.

8. Vergaser (10) nach Anspruch 7, **dadurch gekennzeichnet, dass** der zweite vorbestimmte Wert in der Größenordnung von etwa 10 °C ist.

9. Vergaser (10) nach Anspruch 6 oder 7, **dadurch gekennzeichnet, dass** die Impulsbreite auf einem Maximum ist, wenn die Drosselscheibentemperatur auf dem vorbestimmten Minimalwert ist, und Null ist, wenn die Drosselscheibentemperatur auf dem zweiten vorbestimmten Wert ist.

10. Vergaser (10) nach irgendeinem der vorhergehenden Ansprüche, **dadurch gekennzeichnet, dass** die Stromzufuhr-/Steuerschaltung (44) eine Selbstprüfschaltung (60, 62, 64) enthält, die das Heizelement (40) für eine vorbestimmte Dauer beim Start des Systems einschaltet, und eine Anzeige des korrekten Funktionierens liefert, wenn die Änderungsgeschwindigkeit der Drosselplattentemperatur einen vorbestimmten Wert überschreitet.

11. Vergaser (10) nach Anspruch 10, **dadurch gekennzeichnet, dass** die vorbestimmte Änderungsgeschwindigkeit der Drosselplattentemperatur in der Größenordnung von etwa 10 °C/s beträgt.

12. Vergaser (10) nach irgendeinem der vorhergehenden Ansprüche, **dadurch gekennzeichnet, dass** die Drosselscheibe (22) auf einer Welle (24) montiert ist, wobei die Steuerschaltung (44) ein integraler Bestandteil der Drosselwelle (24) und/oder eines Betätigungshebels ist, um dadurch die mit der elektrischen Stromzufuhr zu verbindenden Drähte zu minimieren.

## Revendications

1. Carburateur (10) comprenant un papillon des gaz (20) en forme de disque (22) qui peut être entraîné en rotation pour réguler la circulation d'un mélange air/carburant au travers d'un conduit (14), le disque de papillon des gaz (22) comportant un élément chauffant (40) formé sur au moins une surface dudit disque de papillon des gaz (22) et une alimentation électrique, **caractérisé en ce qu'**un capteur de température (42) est prévu sur au moins une surface du disque (22), l'alimentation électrique étant commandée par le capteur de température (42) pour maintenir la température du disque de papillon des gaz (22) au-dessus d'une température minimale prédéterminée, le capteur de température (42) ayant un temps de réponse de l'ordre de 10 µs et une résolution de l'ordre de 0,01°C.

2. Carburateur (10) selon la revendication 1, **caractérisé en ce que** l'élément chauffant (40) est un élément en film mince.

3. Carburateur (10) selon la revendication 1 ou 2, **caractérisé en ce que** le disque de papillon des gaz (22) est formé d'acier inoxydable.

4. Carburateur (10) selon l'une quelconque des revendications précédentes, **caractérisé en ce que** le capteur de température (42) est une diode du type planar.

5. Carburateur (10) selon l'une quelconque des revendications précédentes, **caractérisé en ce que** la première valeur prédéterminée est de l'ordre de 2°C.

6. Carburateur (10) selon l'une quelconque des revendications précédentes, **caractérisé en ce qu'**une alimentation à impulsions est utilisée pour activer l'élément chauffant (40).

7. Carburateur (10) selon la revendication 6, **caractérisé en ce que** la largeur des impulsions diminue de façon proportionnelle à mesure que la température du disque de papillon des gaz (22) augmente de la valeur minimale prédéterminée à une deuxième valeur prédéterminée.

8. Carburateur (10) selon la revendication 7, **caractérisé en ce que** la deuxième valeur prédéterminée est de l'ordre de 10°C.

9. Carburateur (10) selon la revendication 6 ou 7, **caractérisé en ce que** la largeur de l'impulsion est au maximum lorsque la température du disque de papillon des gaz est à la valeur minimale prédéterminée et est nulle lorsque la température du disque de papillon des gaz est à la deuxième valeur prédéterminée.

10. Carburateur (10) selon l'une quelconque des revendications précédentes, **caractérisé en ce que** le circuit d'alimentation/de commande (44) comprend un circuit de test automatique (60, 62, 64), qui met en marche l'élément chauffant (40) pendant une période prédéterminée, à la mise sous tension du système et fournit une indication d'un fonctionnement correct si le taux de variation de la température de plaque de papillon des gaz dépasse une valeur prédéterminée.

11. Carburateur (10) selon la revendication 10, **caractérisé en ce que** le taux de variation prédéterminé de la température de plaque de papillon des gaz est de l'ordre de 10°C/s.

12. Carburateur (10) selon l'une quelconque des revendications précédentes, **caractérisé en ce que** le disque de papillon des gaz (22) est monté sur un axe (24), le circuit de commande (44) étant solidaire de l'axe de papillon des gaz (24) et/ou d'un levier d'actionneur en minimisant ainsi les fils à connecter à l'alimentation électrique.
